# EUROPÄISCHE PATENTSCHRIFT

(11) **EP 2 809 469 B1**
(45) Veröffentlichungstag und Bekanntmachung des Hinweises auf die Patenterteilung: **09.12.2015**
(21) Anmeldenummer: 12818871.1
(22) Anmeldetag: 28.12.2012
(51) Int. Cl.: B23B 27/06, B23G 5/04, B23G 5/10, B23G 5/20

(54) **SCHNEIDPLATTE**
CUTTING INSERT
PLAQUETTE DE COUPE

(30) Priorität: 01.02.2012 AT 500182012
(43) Veröffentlichungstag der Anmeldung: 10.12.2014
(73) Patentinhaber: Boehlerit GmbH & Co. KG., 8605 Kapfenberg (AT)
(72) Erfinder: BÄRNTHALER, Walter, A-8641 St. Marein im Mürztal (AT)
(74) Vertreter: Wirnsberger, Gernot
(86) Internationale Anmeldenummer: PCT/AT2012/050210
(87) Internationale Veröffentlichungsnummer: WO 2013/113048

(56) Entgegenhaltungen:
- US-A- 4 645 386
- US-A1- 2008 170 921

## Beschreibung

Die Erfindung betrifft eine Schneidplatte zum Schneiden eines Gewindes gemäss dem Oberbegriff des Patentanspruchs 1, siehe z.B. die Dokumente US 4 645 386 A und US 2008/170921 A1.

Rohre für die Ölfeldtechnik, insbesondere für Ölbohrungen, sind üblicherweise aus austenitischen Chromstählen gefertigt. Die Rohre sind jeweils an einem Ende mit einem Innengewinde und an einem gegenüberliegenden Ende mit einem Außengewinde ausgebildet, sodass aus einzelnen Rohren ein Strang erstellt werden kann. Die Außengewinde sind hierfür mit einem kegeligen Gewinde versehen, damit bei Verbinden mit einem Innengewinde eines anderen Rohres eine im Gewinde dichtende Verbindung möglich ist.

Zur Erstellung von kegeligen Gewinden an Rohren werden Schneidplatten eingesetzt, die mit mehreren außenseitigen Schneidzähnen ausgebildet sind. Die Schneidzähne verlaufen entlang einer Reihe und werden zur Erstellung eines Gewindes mit einem Werkzeug um ein zu bearbeitendes Rohr geführt. Dabei sind die Schneidzähne häufig auf der Schneidplatte so angeordnet, dass bei einer Bearbeitung durch Verfahren eines Schneidplattenträgers oder alternativ eines bearbeiteten Rohres ein gewünschter Kegelwinkel des kegeligen Gewindes eingestellt wird.

Schneidplatten für Werkzeuge zur Herstellung eines kegeligen Gewindes an einem Rohr werden bevorzugt aus einem Hartmetall, also einer Kombination eines oder mehrerer Hartstoffe wie Wolframcarbid und einem oder mehreren Bindemetallen wie Cobalt, durch Sintern unter Druck hergestellt. Anschließend wird ein so erstellter Sinterrohling mit einer Schleifscheibe unter Erstellung einer endgültigen Kontur bearbeitet.

Bei herkömmlichen Schneidplatten zur Herstellung eines kegeligen Gewindes sind wie erwähnt mehrere Schneidzähne in einer Reihe angeordnet. Die Schneidzähne erheben sich dabei mit unterschiedlicher Höhe von der Deckfläche, und zwar mit zunehmender Höhe. Dies ist dadurch begründet, dass bei einer Spanabnahme jeweils nur 0,1 bis 0,2 mm Spanhöhe abgenommen werden soll, weshalb die Höhe der Schneidzähne vom ersten bis zum letzten Schneidzahn jeweils ansteigt.

Bei Schneidplatten gemäß dem Stand der Technik ist eine Nutzungsdauer durch eine einzige Reihe von Schneidzähnen begrenzt. Wünschenswert wäre es, ähnlich wie dies für Wendeschneidplatten bekannt ist, mehrere Reihen von Schneidzähnen an einer Schneidplatte auszubilden, sodass bei Verschleiß einer Reihe von Schneidzähnen die Platte einfach gedreht werden kann, um an derselben Schneidplatte eine weitere Reihe von Schneidzähnen zur Erstellung eines kegeligen Gewindes an einem Rohr zur Verfügung zu haben. Dies würde die Nutzungsdauer einer Schneidplatte erheblich verlängern bzw. vervielfachen. Gegen eine derartige Ausbildung einer Schneidplatte spricht jedoch der vorgesehene Schleifprozess, mit welchem die Schneidzähne bzw. die Schneidplatte nach dem Sintern in einsatzfähigen Zustand gebracht werden müssen. Ist an einer gegenüberliegenden Seite einer Reihe von Schneidzähnen ebenfalls eine Reihe von Schneidzähnen vorgesehen, kann ein Schleifen nicht mehr angewendet werden, da bei der erforderlichen gedanklichen Verdrehung der Reihen zueinander - ein Schneidzahn mit der größten Höhe in einer Reihe liegt dem Schneidzahn mit der geringsten Höhe der gegenüberliegenden Reihe gegenüber - eine Schleifscheibe, die um ein Vielfaches größer ist als eine Schneidplatte, beim Schleifen einer Reihe von Schneidzähnen die gegenüberliegende Reihe bzw. deren Schneidzähne verletzen würde.

Aufgabe der Erfindung ist es, eine Schneidplatte der eingangs genannten Art anzugeben, die eine lange Nutzungsdauer aufweist und auf einfache Weise herstellbar ist.

Eine weitere Aufgabe der Erfindung besteht darin, ein Werkzeug der eingangs genannten Art anzugeben, das mit einer entsprechenden Schneidplatte ausgestattet ist.

Die Aufgabe wird erfindungsgemäß durch eine Schneidplatte, welche die im Patentanspruch 1 angeführten Merkmale aufweist, gelöst.

Ein mit der Erfindung erzielter Vorteil ist darin zu sehen, dass eine Schneidplatte zum Schneiden eines insbesondere kegeligen Außengewindes an einem Rohr bereitgestellt wird, die in Art einer Wendeschneidplatte mit zumindest zwei verwendbaren Seiten ausgebildet ist. Die Schneidplatte kann auf einfache Weise erstellt werden, da gegenüberliegende Bereiche, in welchen die Reihen von Schneidzähnen angeordnet sind, vom Zentrum nach außen hin abfallen und gleichzeitig gegeneinander um eine Achse verdreht sind. Dadurch ist es möglich, dass eine vorgepresste Schneidplatte mit einer wesentlich größeren Schleifscheibe geschliffen wird, ohne dass beim Schleifen einer Reihe von Schneidzähnen die gegenüberliegende Reihe von Schneidzähnen oder vertiefte Bereiche zwischen diesen berührt und damit verletzt werden. Eine nach außen hin abfallende Ausbildung der Bereiche mit den Schneidzähnen ist dabei eine erste Maßnahme, die sicherstellt, dass eine Schleifscheibe bei Schleifen der Deckfläche bzw. Regionen zwischen den Schneidzähnen so geführt werden kann, dass die Schleifscheibe über die vertieften Regionen auf der gegenüberliegenden Seite der Schneidplatte fährt. Dabei ist allerdings noch die Möglichkeit gegeben, dass die Schleifscheibe einzelne Schneidzähne berührt, welche sich von der Deckfläche in die Höhe erstrecken. Um dies zu vermeiden, ist als zweite Maßnahme vorgesehen, dass die Bereiche gegeneinander um eine Achse verdreht sind. Ein entsprechendes Aufdrehen, gegebenenfalls zusätzlich zu einer vorgesehenen Verdrehung für die Erstellung eines kegeligen Gewindes, stellt sicher, dass auch die Schneidzähne bei einer Bearbeitung mit einer Schleifscheibe nicht verletzt werden.

Die Verdrehung der einzelnen Bereiche, welche die Schneidzähne tragen, erfolgt um eine normal zu den Reihen der Schneidzähne und durch diese verlaufende Achse.

Im Hinblick auf eine Verwendung der Schneidplatte als Wendeschneidplatte ist es zweckmäßig, dass die Bereiche um denselben absoluten Winkel verdreht sind. Dadurch ist eine entsprechende Symmetrie der Schneidplatte gegeben, welche es erlaubt, dass durch einfaches Drehen der Schneidplatte um 180° eine neue Reihe von Schneidzähnen in Einsatz bringbar ist, wenn eine Reihe von Schneidzähnen nicht mehr funktionstüchtig ist.

Die Bereiche sind vorzugsweise um einen Winkel von bis zu 6°, vorzugsweise bis zu 5°, um die Achse verdreht. Derartig kleine Winkel reichen in der Regel aus, um einerseits einen Kegelwinkel zu berücksichtigen, andererseits aber auch um eine einwandfreie Bearbeitung zu ermöglichen.

Die Schneidzähne sind bevorzugt in jeder Reihe entlang derselben mit abfallender Höhe ausgebildet. Dadurch kann mit jedem einzelnen Schneidzahn eine etwa konstante Spanabnahme bewirkt werden.

Aus Symmetriegründen ist vorgesehen, dass die Schneidzähne geringerer Höhe einer Reihe jeweils den Schneidzähnen größerer Höhe der gegenüberliegenden Reihe gegenüberliegen. Dies ist zweckmäßig, wenn die Schneidplatte bei gleichbleibender Höhe einer Spanabnahme pro Schneidzahn durch Drehen um 180° zur Deckung gebracht werden soll, und erforderlich, wenn die Schneidplatte als Wendeschneidplatte ausgebildet sein soll.

Die Schneidplatte kann in Draufsicht grundsätzlich mit beliebigem Umfang ausgebildet sein. Möglich ist es beispielsweise, dass die Schneidplatte als quadratische Schneidplatte ausgebildet ist, wobei an jeder Seite des Quadrats eine Reihe von Schneidzähnen vorliegt. In diesem Fall stehen vier Reihen von Schneidzähnen zur Verfügung, die gleichwertig sind. Möglich ist auch eine sechseckige oder achteckige Ausbildung mit dementsprechend sechs bzw. acht Reihen von Schneidzähnen. Aufgrund restriktiver geometrischer Bedingungen ist es jedoch für viele Fälle ausreichend, dass die Schneidplatte als Längsseiten ausgebildete Seitenflächen und als Breitseiten ausgebildete Seitenflächen aufweist und die Reihen von Schneidzähnen an den Längsseiten angeordnet sind. Durch eine derartige, in Draufsicht rechteckige Ausbildung der Schneidplatte werden zwei Reihen von schneidaktiven Schneidzähnen geschaffen, die für eine Bearbeitung eines kegeligen Gewindes genutzt werden können. In diesem Zusammenhang kann vorgesehen sein, dass die Grundfläche und Deckfläche verbindenden, als Längsseiten ausgeführten Seitenflächen im Querschnitt zur Längsseite von der Grundfläche zur Deckfläche verbreiternd ausgeführt sind. Dadurch lässt sich auf einfache Weise ein günstiger Spanwinkel an den Schneidkanten der Schneidzähne einstellen. Insbesondere kann vorgesehen sein, dass die entsprechenden Seitenflächen einen Winkel von 95° bis 105°, insbesondere 98° bis 103°, mit der Grundfläche einschließen.

Vorgesehen sein kann auch, dass die Grundfläche und Deckfläche verbindenden, als Breitseiten ausgeführten Seitenflächen im Querschnitt zur Breitseite von der Grundfläche zur Deckfläche verjüngend ausgeführt sind. Durch eine derartige Ausbildung ist es bei entsprechender Ausbildung eines Plattensitzes eines Werkzeuges möglich, dass die Schneidplatte mittels einer Klemmsicherung alleine oder zusätzlich besonders fest im Plattensitz gehalten werden kann, wodurch die Schneidplatte im Einsatz besonders hohen Schnittkräften standhalten kann. Diesbezüglich ist bevorzugt, dass die Seitenflächen einen Winkel von 78° bis 87°, insbesondere 80°bis 84°, mit der Grundfläche einschließen.

Üblicherweise besteht eine erfindungsgemäße Schneidplatte aus einem Hartmetall und ist gegebenenfalls zumindest im Bereich der Schneidzähne beschichtet.

Die weitere Aufgabe der Erfindung wird durch ein Werkzeug der eingangs genannten Art gelöst, das mit einer erfindungsgemäßen Schneidplatte ausgestattet bzw. bestückt ist.

Bei einem entsprechend ausgestalteten Werkzeug kommen die Vorteile einer erfindungsgemäßen Schneidplatte, die vorstehend erläutert wurden, voll zum Tragen.

Es ist von Vorteil, wenn die Schneidplatte im Plattensitz relativ zu einer Längsachse des Werkzeuges geneigt angeordnet ist, vorzugsweise mit einem Winkel von bis zu 35°, insbesondere 15° bis 25°. Durch die geneigte Anordnung der Schneidplatte ist diese sicher im Plattensitz gehalten. Auf der anderen Seite wird auf die Schneidzähne bzw. deren Schneidkanten nicht so viel Druck ausgeübt, dass die Platte aus dem Plattensitz gelöst wird.

Insbesondere bei der erwähnten geneigten Anordnung der Schneidplatte besteht die Möglichkeit, dass in der Kassette oder dem Werkzeug beidseits der Reihen von Schneidzähnen Auslässe von Kühlmittelkanälen angeordnet sind. Dadurch ist es möglich, dass die jeweils schneidaktive Reihe von Schneidzähnen von zwei Richtungen etwa senkrecht zu den Schneidkanten mit Kühlmittel beaufschlagt wird, sodass eine effektive Kühlung gegeben ist. Dies kann eine Nutzungsdauer der Schneidplatte steigern.

Weitere Merkmale, Vorteile und Wirkungen der Erfindung ergeben sich aus dem nachstehend dargestellten Ausführungsbeispiel. In den Zeichnungen, auf welche dabei Bezug genommen wird, zeigen:
Fig. 1 eine erfindungsgemäße Schneidplatte;
Fig. 2 eine erfindungsgemäße Schneidplatte gemäß Fig. 1 in Draufsicht;
Fig. 3 eine erfindungsgemäße Schneidplatte in Seitenansicht;
Fig. 4 eine erfindungsgemäße Schneidplatte in stirnseitiger Ansicht;
Fig. 5 eine Kassette mit einer erfindungsgemäßen Schneidplatte;
Fig. 6 eine Seitenansicht der Kassette gemäß Fig. 5;
Fig. 7 eine Draufsicht auf die Kassette gemäß Fig. 5;
Fig. 8 einen Teilquerschnitt durch die Kassette gemäß Fig. 5.

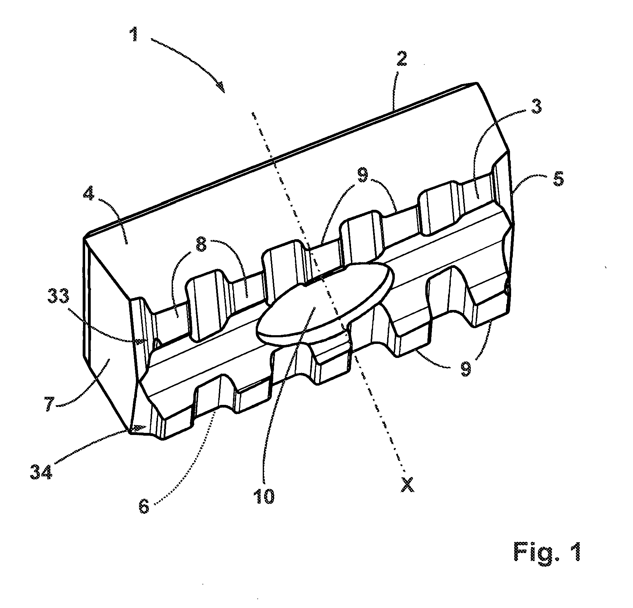

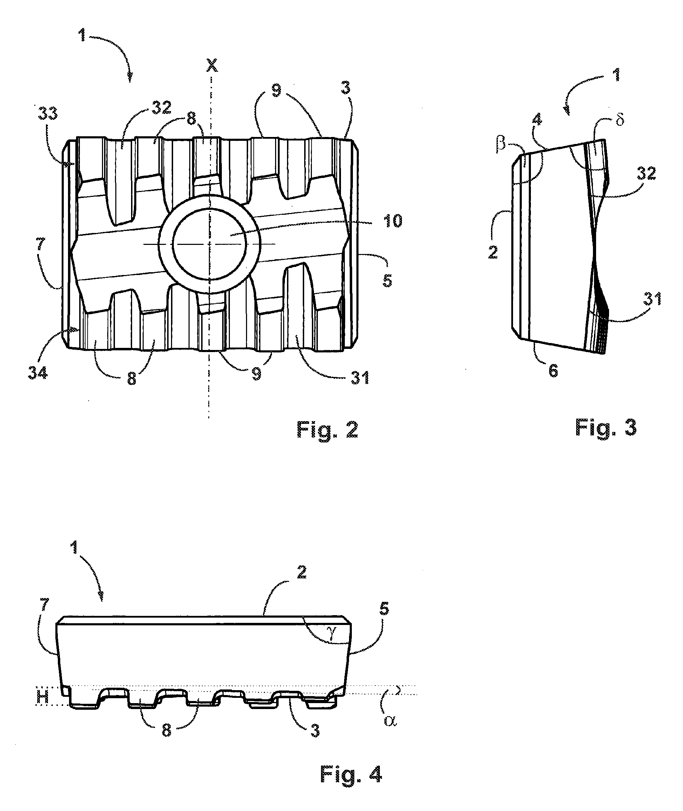

In Fig. 1 bis 4 ist eine erfindungsgemäße Schneidplatte in verschiedenen Ansichten dargestellt. In Fig. 1 ist die Schneidplatte 1 in einer perspektivischen Darstellung gezeigt. Die Schneidplatte 1 weist eine Grundfläche 2 sowie eine Deckfläche 3 auf, die durch Seitenflächen 4, 5, 6, 7 verbunden sind. Wie aus Fig. 2 bis 4 ersichtlich ist, ist die Grundfläche 2 eben ausgebildet. Von der Grundfläche 2 erstreckt sich zunächst ein kurzer angefaster Bereich, welcher in die verbleibenden Bereiche der Seitenflächen 4, 5, 6, 7 übergeht, welche im Wesentlichen die Seitenflächen 4, 5, 6, 7 definieren bzw. festlegen. Die Schneidplatte 1 ist in Draufsicht rechteckig ausgebildet, wenn auch andere Formen möglich sind, beispielsweise eine quadratische Ausbildung. An Längsseiten der Schneidplatte 1 sind die Seitenflächen 4, 6 angeordnet, welche sich, wie insbesondere in Fig. 3 ersichtlich ist, von der Grundfläche 2 zur Deckfläche 3 hin verbreitern, wobei die Seitenflächen 4, 6 einen Winkel β von etwa 100° mit der Grundfläche 2 einschließen. Die an Breitseiten 5, 7 angeordneten kürzeren Seitenflächen 5, 7 sind wie die an den Längsseiten angeordneten Seitenflächen 4, 6 eben ausgeführt, verjüngen sich jedoch im Querschnitt von der Grundfläche 2 zur Deckfläche 3 hin, sodass die Schneidplatte 1 in stirnseitiger Ansicht auf die Längsseiten eine etwa trapezförmige Form aufweist. Dabei schließen die Seitenflächen 5, 7 einen Winkel γ von etwa 82° mit der Grundfläche 2 ein.

An der Deckfläche 3 sind zwei gegenüberliegende Bereiche 31, 32 vorgesehen, die von einem Zentrum 10 zu den an den Längsseiten angeordneten Seitenflächen 4, 6 hin abfallen, was insbesondere aus Fig. 3 ersichtlich ist. Das Zentrum 10 kann wie im gegenständlichen Fall von einer Öffnung für ein Befestigungsmittel durchsetzt sein, wiewohl dies nicht zwingend ist, wenn die Schneidplatte 1 auf andere Weise als mit einem die Schneidplatte 1 durchsetzenden Befestigungsmittel fixiert wird, beispielsweise einer Klemmhalterung. Die Bereiche 31, 32 tragen jeweils eine Reihe 33, 34 von Schneidzähnen 8 mit stirnseitigen Schneidkanten 9. Die beiden Reihen 33, 34 weisen im Ausführungsbeispiel jeweils fünf Schneidzähne 8 auf, wenngleich die Zahl von Schneidzähnen 8 variieren kann, beispielsweise im Bereich von drei bis neun Schneidzähnen 8. In jeder Reihe 33, 34 sind die Schneidzähne 8 mit einer entlang der jeweiligen Reihe 33, 34 zunehmenden Höhe H ausgebildet. Mit der unterschiedlichen Höhe H wird berücksichtigt, dass eine maximale Spanabnahme 0,1 bis 0,2 mm pro Spanabnahme betragen kann. Die beiden Reihen 33, 34 von Schneidzähnen 8 sind dabei einerseits gemäß Fig. 1 bzw. 4 zur Grundfläche 2 hin um eine Achse X um einen Winkel α desselben Betrages, aber in unterschiedlichen Drehrichtungen verkippt. Andererseits sind die Reihen 33, 34 auf den nach außen hin abfallenden Bereichen 31, 32 angeordnet. Dadurch wird sichergestellt, dass die zwischen den Schneidzähnen 8 befindlichen vertieften Regionen ohne Probleme geschliffen werden können bzw. eine Schleifscheibe bei der Bearbeitung einer Reihe 33, 34 freigehen kann, ohne dass die jeweils gegenüberliegende Reihe 33, 34 bzw. deren Schneidzähne 8 oder die dazwischenliegenden vertieften Bereiche verletzt werden.

Die Schneidzähne 8 sind so ausgeformt, dass deren kopfseitige Flächen, die im Schneideinsatz die Freiflächen bilden, etwa einen Winkel δ von 85° bis 95°; bevorzugt etwa 90°, mit den Seitenflächen 4, 6 einschließen, wie dies aus Fig. 3 ersichtlich ist.

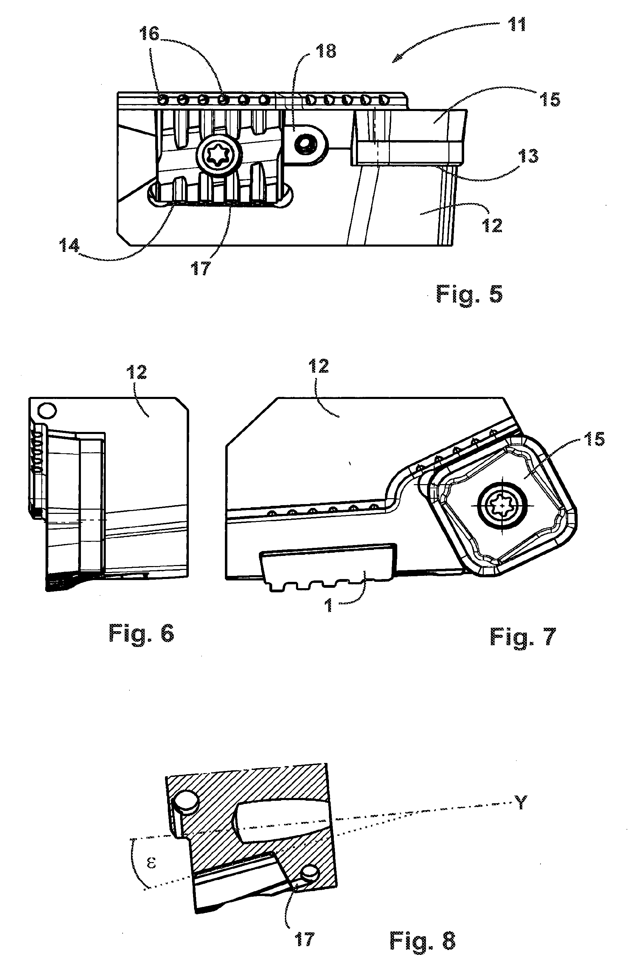

In Fig. 5 bis 8 ist eine Kassette 12 eines Werkzeuges 11 dargestellt. Das Werkzeug 11 umfasst in der Regel mehrere derartiger Kassetten 12, die jeweils einen stirnseitigen Plattensitz 13 und einen in Längsrichtung danach angeordneten zweiten Plattensitz 14 aufweisen. Im Plattensitz 13 ist eine Schälplatte 15 gehalten, während im Plattensitz 14 eine erfindungsgemäße Schneidplatte 1 gehalten ist, indem ein Befestigungsmittel durch die zentrale, die Schneidplatte 1 durchdringende Öffnung geführt und in der Kassette 12 befestigt ist. Grundsätzlich können sowohl die Schälplatte 15 als auch die Schneidplatte 1 unmittelbar am Werkzeug 11 befestigt sein bzw. kann auf die Kassette 12 verzichtet werden.

Die Kassette 12 ist in Draufsicht gemäß Fig. 7 so ausgebildet, dass der Plattensitz 14 für die Schneidplatte 1 wie diese etwa trapezförmig ausgebildet ist. Dadurch ist es möglich, dass die Schneidplatte 1 fest im Plattensitz 14 gehalten wird, auch wenn hohe Schnittkräfte auftreten. Dabei kann die Schneidplatte zusätzlich mit einer Klemmsicherung 18 gegen ein Loslösen gesichert sein.

Die Schneidplatte 1 ist im Plattensitz 14 derart geneigt angeordnet bzw. angestellt, dass ein Winkel ε in Bezug auf eine Längsachse Y des Werkzeuges 11 etwa 15° bis 25° beträgt. Dadurch ist eine gute Schnittleistung bei gleichzeitiger Vermeidung eines Loslösens der Schneidplatte 1 oder zu hoher Belastung derselben möglich. Darüber hinaus sind in der Kassette 12 oder alternativ unmittelbar im Werkzeug Kühlmittelkanäle 16, 17 vorgesehen. Erste Kühlmittelkanäle 16 münden oberhalb der im Schneideinsatz aktiven Schneidzähne 8 bzw. den Schneidkanten 9 derselben. Aufgrund der erfindungsgemäßen Ausbildung der Schneidplatte 1 und der schrägen Anstellung bzw. Befestigung derselben im Plattensitz 14 können auch an der Unterseite bzw. den nicht schneidaktiven Schneidzähnen 8 Auslässe von zweiten Kühlmittelkanälen 17 vorgesehen sein. Mit dieser Ausbildung ist es möglich, dass die Schneidkanten 9 bzw. Schneidzähne 8 im schneidaktiven Bereich von zwei Richtungen, jeweils etwa im rechten Winkel mit Kühlmittel beaufschlagt werden, was zu einer effektiven Kühlung und damit zu einer Verlängerung der Nutzungsdauer der Schneidplatte 1 führt.

## Patentansprüche

1. Schneidplatte (1) zum Schneiden eines Gewindes, aufweisend eine Grundfläche (2), eine Deckfläche (3) und Seitenflächen (4, 5, 6, 7), welche die Grundfläche (2) und die Deckfläche (3) miteinander verbinden, wobei auf der Deckfläche (3) mehrere in einer Reihe (33, 34) angeordnete Schneidzähne (8) mit Schneidkanten (9) ausgebildet sind, wobei die Deckfläche (3) gegenüberliegende Bereiche (31, 32) aufweist, die von einem Zentrum (10) nach außen hin abfallen und aufweichen jeweils eine Reihe (33, 34) von Schneidzähnen (8) angeordnet ist, **dadurch gekennzeichnet, dass** die abfallenden Bereiche (31, 32) gegeneinander in unterschiedlichen Drehrichtungen um eine Achse (X) verdreht sind.

2. Schneidplatte (1) nach Anspruch 1, **dadurch gekennzeichnet, dass** die Bereiche (31, 32) um eine normal zu den Reihen (33, 34) der Schneidzähne (8) und durch diese verlaufende Achse (X) verdreht sind.

3. Schneidplatte (1) nach Anspruch 1 oder 2, **dadurch gekennzeichnet, dass** die Bereiche (31, 32) um denselben absoluten Winkel (α) verdreht sind.

4. Schneidplatte (1) nach einem der Ansprüche 1 bis 3, **dadurch gekennzeichnet, dass** die Bereiche (31, 32) um einen Winkel (α) von bis zu 6°, vorzugsweise bis zu 5°, um die Achse (X) verdreht sind.

5. Schneidplatte (1) nach einem der Ansprüche 1 bis 4, **dadurch gekennzeichnet, dass** die Schneidzähne (8) in jeder Reihe (33, 34) entlang derselben mit abfallender Höhe (H) ausgebildet sind.

6. Schneidplatte (1) nach einem der Ansprüche 1 bis 5, **dadurch gekennzeichnet, dass** die Schneidzähne (8) geringerer Höhe (H) einer Reihe (33, 34) jeweils den Schneidzähnen (8) größerer Höhe (H) der gegenüberliegenden Reihe (33, 34) gegenüberliegen.

7. Schneidplatte (1) nach einem der Ansprüche 1 bis 6, **dadurch gekennzeichnet, dass** die Schneidplatte (1) als Längsseiten ausgebildete Seitenflächen (4, 6) und als Breitseiten ausgebildete Seitenflächen (5, 7) aufweist und die Reihen (33, 34) von Schneidzähnen (8) an den Längsseiten angeordnet sind.

8. Schneidplatte (1) nach Anspruch 7, **dadurch gekennzeichnet, dass** die Grundfläche (2) und Deckfläche (3) verbindenden, als Längsseiten ausgeführten Seitenflächen (4, 6) im Querschnitt zur Längsseite von der Grundfläche (2) zur Deckfläche (3) verbreiternd ausgeführt sind.

9. Schneidplatte (1) nach Anspruch 8, **dadurch gekennzeichnet, dass** die Seitenflächen (4, 6) einen Winkel (β) von 95° bis 105°, insbesondere 98° bis 103°, mit der Grundfläche (2) einschließen.

10. Schneidplatte (1) nach einem der Ansprüche 7 bis 9, **dadurch gekennzeichnet, dass** die Grundfläche (2) und Deckfläche (3) verbindenden, als Breitseiten ausgeführten Seitenflächen (5, 7) im Querschnitt zur Breitseite von der Grundfläche (2) zur Deckfläche (3) verjüngend ausgeführt sind.

11. Schneidplatte (1) nach Anspruch 10, **dadurch gekennzeichnet, dass** die Seitenflächen (5, 7) einen Winkel (γ) von 78° bis 87°, insbesondere 80° bis 84°, mit der Grundfläche (2) einschließen.

12. Schneidplatte (1) nach einem der Ansprüche 1 bis 11, **dadurch gekennzeichnet, dass** die Schneidplatte (1) aus Hartmetall besteht und gegebenenfalls zumindest im Bereich der Schneidzähne (8) beschichtet ist.

13. Werkzeug (11) zur Herstellung eines Gewindes an einem Rohr, aufweisend eine Kassette (12) mit Plattensitzen (13, 14) oder entsprechend ausgebildete Werkzeugbereiche zur Aufnahme von Schneidplatten (1), wobei in zumindest einem Plattensitz (13) eine Schälplatte (15) und in zumindest einem Plattensitz (14) eine Schneidplatte (1) zum Schneiden des Gewindes angeordnet ist, **dadurch gekennzeichnet, dass** die Schneidplatte (1) nach einem der Ansprüche 1 bis 12 ausgebildet ist.

14. Werkzeug (11) nach Anspruch 13, **dadurch gekennzeichnet, dass** die Schneidplatte (1) im Plattensitz (14) relativ zu einer Längsachse (Y) des Werkzeuges (11) geneigt angeordnet ist, vorzugsweise mit einem Winkel (ε) von bis zu 35°, insbesondere 15° bis 25°.

15. Werkzeug (11) nach Anspruch 13 oder 14, **dadurch gekennzeichnet, dass** in der Kassette (12) oder dem Werkzeug (11) beidseits der Reihen (33, 34) von Schneidzähnen (8) Auslässe von Kühlmittelkanälen (16) angeordnet sind.

## Claims

1. A cutting plate (1) for cutting a thread, exhibiting a base surface (2), a cover surface (3) and lateral surfaces (4, 5, 6, 7), which join the base surface (2) and cover surface (3) together, wherein several cutting teeth (8) with cutting edges (9) arranged in a row (33, 34) are formed on the cover surface (3), wherein the cover surface (3) exhibits opposing areas (31, 32), which fall off outwardly from a center (10), and on which is arranged a respective row (33, 34) of cutting teeth (8), **characterized in that** the falling areas (31, 32) are twisted around an axis (X) opposite each other in different rotational directions.

2. The cutting plate (1) according to claim 1, **characterized in that** the areas (31, 32) are twisted around an axis (X) that is normal relative to the rows (33, 34) of cutting teeth (8) and runs through the latter.

3. The cutting plate (1) according to claim 1 or 2, **characterized in that** the areas (31, 32) are twisted around the same absolute angle (α).

4. The cutting plate (1) according to one of claims 1 to 3, **characterized in that** the areas (31, 32) are twisted around the axis (X) by an angle (α) of up to 6°, preferably of up to 5°.

5. The cutting plate (1) according to one of claims 1 to 4, **characterized in that** the cutting teeth (8) are formed in each row (33, 34) along the latter with a falling height (H).

6. The cutting plate (1) according to one of claims 1 to 5, **characterized in that** the cutting teeth (8) of a smaller height (H) within a row (33, 34) lie opposite the respective cutting teeth (8) of a larger height (H) of the opposite row (33, 34).

7. The cutting plate (1) according to one of claims 1 to 6, **characterized in that** the cutting plate (1) exhibits lateral surfaces (4, 6) designed as long sides and lateral surfaces (5, 7) designed as broadsides, and the rows (33, 34) of cutting teeth (8) are arranged on the long sides.

8. The cutting plate (1) according to claim 7, **characterized in that** the lateral surfaces (4, 6) joining together the base surface (2) and cover surface (3) and designed as long sides are configured so as to expand from the base surface (2) to the cover surface (3) in cross section to the long side.

9. The cutting plate (1) according to claim 8, **characterized in that** the lateral surfaces (4, 6) form an angle (β) of 95° to 105°, in particular of 98° to 103°, with the base surface (2).

10. The cutting plate (1) according to one of claims 7 to 9, **characterized in that** the lateral surfaces (5, 7) joining together the base surface (2) and cover surface (3) and designed as broadsides are configured so as to taper from the base surface (2) to the cover surface (3) in cross section to the broadside.

11. The cutting plate (1) according to claim 10, **characterized in that** the lateral surfaces (5, 7) form an angle (γ) of 78° to 87°, in particular of 80° to 84°, with the base surface (2).

12. The cutting plate (1) according to one of claims 1 to 11, **characterized in that** the cutting plate (1) consists of carbide metal, and if necessary is coated at least in the area of the cutting teeth (8).

13. A tool (11) for fabricating a thread on a pipe, exhibiting a cartridge (12) with plate seats (13, 14) or correspondingly designed tool areas to receive cutting plates (1), wherein at least one plate seat (13) incorporates a peeling plate (15) and at least one plate seat (14) incorporates a cutting plate (1) for cutting the thread, **characterized in that** the cutting plate (1) is designed according to one of claims 1 to 12.

14. The tool (11) according to claim 13, **characterized in that** the cutting plate (1) in the plate seat (14) is inclined relative to a longitudinal axis (Y) of the tool (11), preferably at an angle (ε) of up to 35°, in particular of 15° to 25°.

15. The tool (11) according to claim 13 or 14, **characterized in that** the cartridge (12) or tool (11) incorporates outlets of coolant channels (16) on either side of the rows (33, 34) of cutting teeth (8).

## Revendications

1. Plaque de coupe (1) pour couper un filet, présentant une face inférieure (2), une face supérieure (3) et des côtés (4, 5, 6, 7) qui relient la face inférieure (2) et la face supérieure (3) entre elles, sachant que plusieurs dents de coupe (8) avec des arêtes de coupe (9) sont formées disposées dans une rangée (33, 34), sachant que la face supérieure (3) présente des parties opposées (31, 32) qui descendent d'un centre (10) vers l'extérieur et sur lesquelles une rangée respective (33, 34) de dents de coupe (8) est disposée, **caractérisée en ce que** les parties (31, 32) descendantes sont tournées l'une contre l'autre dans différents sens de rotation sur un axe (X).

2. Plaque de coupe (1) selon la revendication 1, **caractérisée en ce que** les parties (31, 32) sont tournées sur un axe (X) normal par rapport aux rangées (33, 34) des dents de coupe (8) et passant à travers celles-ci.

3. Plaque de coupe (1) selon la revendication 1 ou 2, **caractérisée en ce que** les parties (31, 32) sont tournées sur le même angle absolu (α).

4. Plaque de coupe (1) selon l'une des revendications 1 à 3, **caractérisée en ce que** les parties (31, 32) sont tournées sur un angle (α) allant jusqu'à 6°, de préférence jusqu'à 5°, sur l'axe (X).

5. Plaque de coupe (1) selon l'une des revendications 1 à 4, **caractérisée en ce que** les dents de coupe (8) sont formées le long de chaque rangée (33, 34), avec une hauteur (H) tombante.

6. Plaque de coupe (1) selon l'une des revendications 1 à 5, **caractérisée en ce que** les dents de coupe (8) de hauteur (H) plus faible d'une rangée (33, 34) font respectivement face aux dents de coupe (8) de hauteur (H) plus grande de la rangée (33, 34) opposée.

7. Plaque de coupe (1) selon l'une des revendications 1 à 6, **caractérisée en ce que** la plaque de coupe (1) présente des côtés (4, 6) formés en tant que grands côtés et des côtés (5, 7) formés en tant que petits côtés, et les rangées (33, 34) de dents de coupe (8) sont disposées sur les grands côtés.

8. Plaque de coupe (1) selon la revendication 7, **caractérisée en ce que** des côtés (4, 6) reliant la face inférieure (2) et la face supérieure (3) conçus en tant que grands côtés présentent une section s'élargissant vers le grand côté de la face inférieure (2) à la face supérieure (3).

9. Plaque de coupe (1) selon la revendication 8, **caractérisée en ce que** les côtés (4, 6) incluent un angle (β) de 95° à 105°, en particulier de 98° à 103°, avec la face inférieure (2).

10. Plaque de coupe (1) selon l'une des revendications 7 à 9, **caractérisée en ce que** des côtés (5, 7) reliant la face inférieure (2) et la face supérieure (3) conçus en tant que petits côtés présentent une section se rétrécissant vers le petit côté de la face inférieure (2) à la face supérieure (3).

11. Plaque de coupe (1) selon la revendication 10, **caractérisée en ce que** les côtés (5, 7) incluent un angle (γ) de 78° à 87°, en particulier de 80° à 84°, avec la face inférieure (2).

12. Plaque de coupe (1) selon l'une des revendications 1 à 11, **caractérisée en ce que** la plaque de coupe (1) est en acier dur et, le cas échéant, est revêtue au moins au niveau des dents de coupe (8).

13. Outil (11) pour fabriquer un filet sur un tube, présentant une cassette (12) avec des sièges de plaque (13, 14) ou des parties d'outil formées de façon correspondante pour recevoir des plaques de coupe (1), sachant que dans au moins un siège de plaque (13) est disposée une plaque de rabotage (15) et dans au moins un siège de plaque (14) est prévue une plaque de coupe (1) pour couper le filet, **caractérisé en ce que** la plaque de coupe (1) est conçue selon l'une des revendications 1 à 12.

14. Outil (11) selon la revendication 13, **caractérisée en ce que** la plaque de coupe (1) est disposée dans le siège de plaque (14) inclinée par rapport à un axe longitudinal (Y) de l'outil (11), de préférence avec un angle (ε) jusqu'à 35°, en particulier de 15° à 25°.

15. Outil (11) selon la revendication 13 ou 14, **caractérisée en ce que** des sorties de canaux de réfrigérant (16) sont disposées dans la cassette (12) ou l'outil (11), des deux côtés des rangées (33, 34) de dents de coupe (8).
